# EUROPEAN PATENT APPLICATION

(11) **EP 3 396 609 A1**
(43) Date of publication of application: **31.10.2018**
(21) Application number: 18169972.9
(22) Date of filing: 27.04.2018
(51) Int. Cl.: G06Q 20/04, G06Q 20/32, G06Q 20/38, G06Q 20/20

(54) **STORING TRANSACTION DATA**

(30) Priority: 28.04.2017 GB 201706830
(71) Applicant: Flux Systems Limited, Reading Berkshire RG1 8EN (GB)
(72) Inventor: REAY, Thomas, Reading, Berkshire RG1 8EN (GB); CUSDEN-ROSS, Matty Seth, London (GB)
(74) Representative: Robson, Aidan John

(57) **Abstract**

A system and method are provided for processing and storing transaction data for users. A plurality of merchant terminals (34) process and store transaction payment information. The server system (26) receives transaction data from the merchant terminals and corresponding purchase verification data from one or more financial institutions (28). This server system matches the transaction data to purchased verification data and can send transaction data which matches purchase verification data to respective user terminals (20), and the respective user terminals are each able to store received transaction data for future access by the respective user.

## Description

This invention relates to a system and method for storing transaction data and in particular invoice data for subsequent retrieval by a user, and also to a system and method for storing loyalty data and automatically generates loyalty benefits.

### Background of the Invention

Consumers frequently make purchases for which access to an invoice is subsequently required. This may be because an item needs to be returned or, occasionally, for other purposes such as an insurance claim. Traditionally invoices are issued as paper items at the point of sale, which makes their retention by consumers awkward as some form of archiving needs to take place. As a result, if an invoice is subsequentially required, it is often not possible to locate it.

In recent years electronic invoices have been generated, particularly with online sales but also with purchases in shops. These are usually emailed to a user or sent with some other messaging service. The receipt of the electronic invoice makes its retention more straight forward but it still requires a user to perform some form of archiving to ensure that it is possible to access the invoice at a later date. Often users fail to do this.

Invoices, of course, include much more information than is available from normal banking records. They include specific items purchased and the amount of each item. Banking records at present typically only include the total of a transaction, merchant name and transaction date. Therefore banking records are inadequate to retrieve full transaction data.

In a conventional transaction system there are merchant terminals comprising software or hardware provided to retailers which are configured to process card transactions. The processing involves requests to and receipt of electronic purchase verification data from a financial institution such as the card scheme or merchant acquirer. The purchase verification data indicates that the transaction can proceed and a user's account may be debited with the appropriate figure. A merchant then issues an invoice either as a paper invoice or by sending an e-mail invoice to a purchaser.

Consumers often have one or more store loyalty cards. These usually require the consumer to produce the loyalty card at the point of purchase to be credited with the appropriate benefit under the loyalty scheme. This benefit is then associated with the consumer data by the retailer using the loyalty card data. Many consumers will have several loyalty card schemes and therefore several different loyalty cards. Benefits are frequently delivered to a consumer in the form of vouchers or discounts available at point of sale at a future purchase.

### SUMMARY OF INVENTION

Preferred embodiments of the present invention provide a system which enables users, banks and merchants to register to use a system which stores electronic copies of invoices and makes these easily accessible to a user. This requires cooperation from at least one financial institution or bank with which users have bank accounts or, alternatively credit cards or charge cards. Users are provided with software such as an app running on a smartphone which is able to link to transactions the user has made and retrieve and store electronic invoice data giving full purchase transaction information rather than just a transaction amount. The software can automatically archive and store such invoice data. The software may be provided by the same organisation as runs the system or by a third party.

In accordance with a preferred embodiment of the invention there is provided a system for processing and storing transaction data for users comprising: a plurality of merchant softwares or hardwares each configured to process transaction payment information and to store transaction data; a first server linked to a financial institution configured to store user identification data for users requiring storage of transaction data and merchant identification data for merchants providing said transaction data for users, the first server further configured to provide purchase verification data corresponding to said transactions; a second server configured to receive transaction data from merchant softwares or hardwares and to receiving corresponding purchase verification data from said first server, and further configured to match said transaction data to said purchase verification data and to send transaction data which matches purchase verification data to respective user terminals associated with said transaction data; and a plurality of user terminals each configured to store received transaction data for future access by a respective user.

This and other aspects of the invention are defined in appended claims to which reference should now be made.

### BRIEF DESCRIPTION OF THE DRAWINGS

Preferred embodiments of the invention will now be described in detail by way of example with reference to the accompanying drawings in which:
Figure 1 is a flow diagram showing the steps which take place when a user registered with an invoice/ transaction data system embodying the invention makes a purchase; and
Figure 2 is a schematic diagram showing the relationships between consumers, merchants, and financial institutions in an embodiment of the invention.

### Detailed Descriptions of Preferred Embodiments

An embodiment of the invention is now described. The transaction data storage system requires consumers, merchants, and a financial institution in order for the service to operate. A financial institution has to agree that purchase verification data, which may involve various pieces of data can be released to the transaction data storage system. Consumers must individually agree that the financial institution which holds information about a particular card may release purchase verification data for purchases made on that card to the transaction data storage service. Merchants must agree that transaction data relating to purchases made by consumers who have signed up to the transaction data storage system can be provided to the transaction data storage system.

When a consumer registers with the transaction data storage system, a partial personal account number associated with a consumer's card as well as other card details such as an expiry date and other data which may be provided with an account is sent to the transaction data system storage and stored. Some or all of this data may be tokenised or encrypted to make it more secure. The transaction data storage service may also send to the financial institution which holds information about the card or account, data indicating that the card is now linked to the transaction data storage system.

When a merchant registers with the transaction data storage system, merchant identification data is created by the transaction data storage system and and this is sent to the transaction data storage system to indicate that consumers who have signed up to the system and who make purchases from that merchant should have data sent by the financial institution to the transaction data storage system. Merchant point of sale terminals for that merchant are configured to provide transaction (invoice) data which is sent to the transaction data storage system.

When a consumer registered with the system makes a purchase at a merchant which has registered with the system, the point of sale terminal which is linked to the merchant sale system verifies the transaction with the relevant financial institution and receives purchase authorisation in return, in the usual well known manner.

A point of scale terminal at a merchant may be a dedicated POS terminal of a well known type comprising dedicated firmware or hardware and suitable software to perform POS functions, or may be a general purpose computer loaded with transaction processing software. For direct purchases the terminal will more frequently be a dedicated POS terminal. For online purchases, the terminal will usually be a general purpose computer and software.

At the financial institution a detection is made that a consumer with a card or account which is registered to the transaction data storage system has made a purchase. In response to this, the financial institution sends purchase verification data to the transaction data storage system relating to that transaction. This purchase verification data can include the amount, tokenised card PAN (which may be a partial PAN), the merchant identifier, the date, and any other data which is required to verify the transaction.

At the transaction data storage system, transaction data which may include the tokenised card PAN, the amount of the transaction, and the date and time of the transaction is checked against the data received from the financial institution. Various matching rules may be used to check this data. If the matching rules are met then it is determined that the transaction data received from the merchant corresponds to a particular consumer, by virtue of the checking of the purchase verification data. When a match occurs, the transaction data storage system sends the transaction invoice data to a user terminal registered to that consumer. The user terminal may be a mobile telephone, a computer, or any other device suitable for processing or storing the relevant software and transaction data.

The transaction or invoice data comprises full details identifying the nature of the purchase made at the merchant by the consumer including as appropriate an invoice number, a date and time of purchase, itemised details of the purchase, a VAT code, and any other data which that merchant usually provides on an invoice.

At the user terminal, a user may, for example on a mobile phone, launch an app and may examine invoices for all purchases he has made at merchants which subscribe to the transaction data storage system. Thus, if a consumer requires subsequent access to an invoice he is able to examine it or print it from his terminal. Thus, a consumer is able to receive at a terminal, invoice transaction data for all the purchases he has made with merchants which have subscribed to the transaction data storage system. The system matches individual transactions with purchase verification data received from a financial institution to ensure that individual consumers are sent the correct transaction data. Preferably the system operates substantially in real time so that very shortly after a customer has made a purchase the transaction data is available to view at his or her terminal. Preferably this is available within a few seconds.

The system may operate with multiple financial institutions, and with consumers and merchants having accounts with different financial institutions. The transaction data storage system will consolidate and match corresponding transaction data from merchants with purchase verification data from consumer's and their financial institutions accordingly based on matching criteria described above.

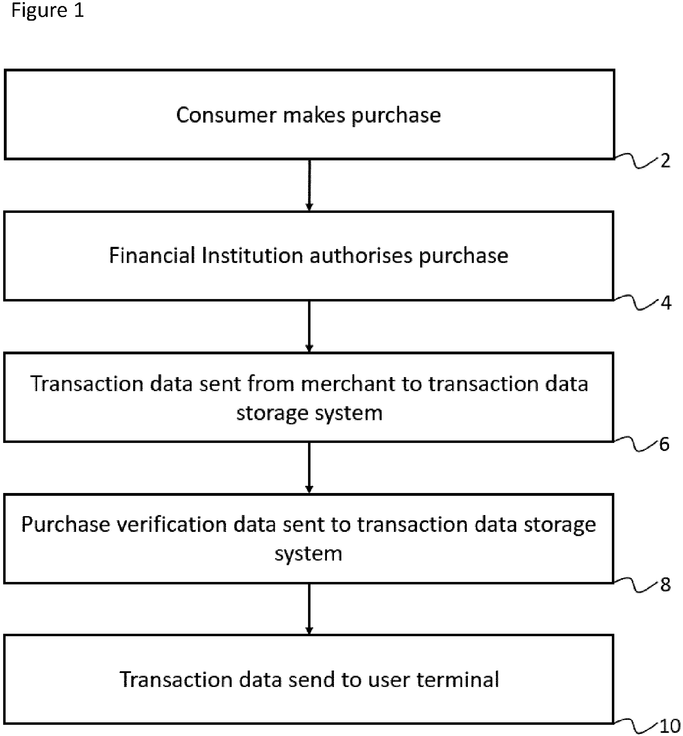

Figure 1 is a flow diagram showing the steps which take place when a consumer makes a purchase. At 2 the consumer makes a purchase at a transaction data storage system enabled merchant. At 4, a financial institution receives purchase data and provides authorisation to the merchant for the purchase to proceed. When this happens, the merchant point of sale terminal sends transaction data to the transaction data storage system at 6.

The transaction data storage system detects that a consumer registered with the transaction data storage system has made a purchase at a merchant registered with the system at 8 and sends transaction data to the system. Alternatively all purchase verification data may be sent to the TDSS, or the TDSS may pull purchase verification data from a financial institution when it receives transaction data from a merchant.

At 10 the transaction data storage system checks the transaction data received from the merchant against the verification data received from the financial institution. If it is determined that the data matches using a set of rules, then at 12 the transaction data is sent to a user terminal for local storage and retrieval. The invoice data is also archived for a predetermined period of time in the transaction data storage system.

Preferably these steps take place substantially in real time so that not only is the purchase authorised quickly, the transaction data is also made available quickly to a user via his terminal.

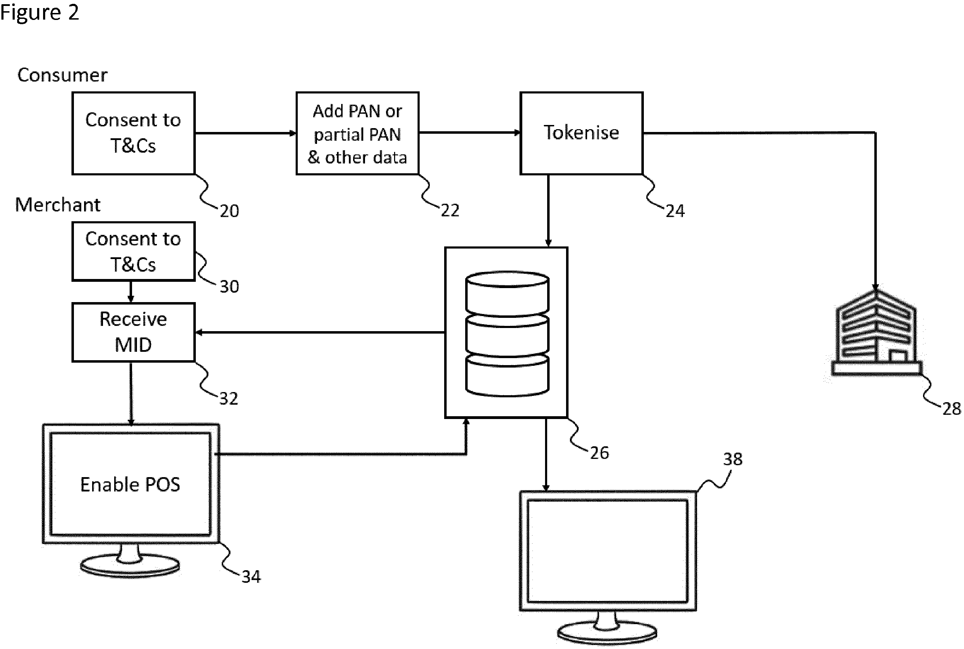

Figure 2 shows schematically the relationship between consumers merchants, a financial institution, and the transaction data storage system (TDSS).

As can be seen, a consumer 20 consents to the terms and conditions of the TDSS and then at 22 payment identifiers associated to that customer will be added to the system. This may involve adding specific card or account details, or may be other data to enable the system to link to a customer's card or account. This data may be tokenised at 24 and is sent to the TDSS database 26. Card data including the partial personal account number which may be tokenised may also be sent to a financial institution 28.

A merchant which wishes to register with the TDSS also consents to terms and conditions at 30. As a result, the merchant is given a merchant identifier (MID) along with other key data such as store location or store logo, at 32 and is then registered on the TDSS. This information is transmitted to a merchant's point of sale terminal at 34 which then enables transaction data to be communicated from the point of sale terminal. The TDSS also sends the MID to the financial institution 28.

When a consumer makes a purchase at a merchant point of sale terminal 34 using his registered card, purchase authorisation takes place in the normal manner with the financial institution 28. That part of the process is not illustrated in Figure 2. At the same time, transaction data is supplied to the TDSS and stored in a database. The transaction data can be pushed by the merchant point of sale terminal software or can be pulled directly from terminal software periodically by the TDSS. Preferably the data is transferred substantially in real time to the TDSS database.

The data received from the TDSS relating to a consumer's card is checked against data received from the merchant concerning the transaction.

The TDSS then matches the transaction data received from the merchant point of sale terminal with the data (purchase verification data) received from the financial institution using one or more rules. Preferably the TDSS tries to match more than one piece of data such as tokenised partial PAN, amount, date, and time of transaction.

If the TDSS determines that there is a match between transaction data and purchase verification data received from the financial institution then the transaction data is sent to a user terminal 38. The transaction data may be stored permanently by the TDSS 26 or may be stored for a limited period of time. The user terminal may download the transaction data and store it permanently or may rely on data stored at the TDSS for subsequent retrieval. The user terminal may use software provided by the TDSS. However, the TDSS may also be configured to deliver transaction data to terminal software provided by third parties to store and view transaction data.

Using this system then enables a user to keep an accurate record of transaction (invoice) data which he subsequently requires for one of a number of purposes. It provides that all invoices are stored in one place for easy retrieval.

An important feature and advantage of the system described here is that it is able to deliver transaction/invoice data to a customer without having to be part of the payment processing system. Preferred embodiments of the invention may also enable a user to link the transaction data storage system to loyalty card or reward points system, so that it is not necessary for loyalty scheme data to be provided at the time of purchase.

When a user links the transaction data storage system to a loyalty card or reward point system. This is done by including details of each loyalty card or reward point system to his registration with the transaction data storage system. Thus the loyalty card or reward scheme data will be stored with the transaction data storage system along with the consumers account number and other card details. The loyalty card or reward scheme data may comprise the other data added at the same time as the PAN at 22 in figure 2.

When a transaction is made, the financial institution which issued the consumer's card does not need to monitor details of the loyalty card or reward scheme and it can operate as previously described. However, at a merchant, the card data is linked to the loyalty card or reward scheme data for that consumer using the transaction data storage system and the user's loyalty account is credited with points or benefits appropriate to the transaction made. This data is stored in the merchants' own computer systems. However, the number of points or rewards which have been credited to a consumer are also made available to the transaction data storage system, which in turn provides them to a user's terminal such as a mobile phone or tablet computer where they can easily be viewed using a user interface by the consumer.

Some users may have more than one bank account and may have both bank accounts registered with the transaction data storage system. If this is done, the transaction data storage system will associate both bank accounts and associated cards with the consumer's loyalty card or reward schemes so that points or rewards can be credited to a user by a merchant whichever bank account is used for a particular transaction. Again, the loyalty points or rewards data for each merchant can be provided to a user interface on a user terminal via the transaction section data storage system. Thus a user can make purchases on two or more bank accounts but only has to register his loyalty card or reward scheme details once with the transaction data storage system. Subsequently there is no need to produce a loyalty card and points or rewards are earned automatically.

The system also has the advantage that it is no longer necessary for a merchant to issue vouchers corresponding to the loyalty points or rewards earned or to offer a discount on a future purchase. Instead, a merchant may offer a straightforward cashback alternative.

This is possible because the transaction data storage system has the information needed to link a consumer's loyalty card or rewards scheme to the consumer's bank account. Thus, a cashback benefit can be sent directly from a merchant to a consumer's bank account when authorised to do so by the transaction data storage system.

The loyalty card or rewards scheme can be configured to automatically generate cashback to the user's bank account when the user's points or rewards reach a predetermined level. Alternatively, cashback can be generated on a periodic basis, e.g. once every month, once every three months, once every six months.

Alternatively, a user can use his user terminal to monitor the value of benefits he has under any loyalty card or rewards scheme and may select a cashback payment at a time of his liking to be credited to either his only linked bank account or to a selected one of his linked bank accounts. A cashback payment may be authorised and made substantially in real time. Authorisation times of a few seconds are currently possible.

Thus, this embodiment of the invention enables a user to link his loyalty card scheme to his bank account and to generate and monitor reward benefits automatically without requiring the consumer to produce a loyalty card or loyalty scheme data each time a purchase is made. It also enables a cashback benefit to be paid directly to a user's bank account without assuming vouchers or providing discount on a future purchase.

## Claims

1. A system for processing and storing transaction data for users comprising:
a plurality of merchant terminals each configured to process transaction payment information and to store transaction data;
a server system configured to receive transaction data from merchant terminals and to receive corresponding purchase verification data from a financial institution, and further configured to match said transaction data to said purchase verification data and to send transaction data which matches purchase verification data to respective user terminals associated with said transaction data; and
a plurality of user terminals each configured to store received transaction data for future access by a respective user.

2. A system according to claim 1 in which the system is configured to send transaction data to user terminals substantially in real time.

3. A system according to claim 1 or 2 in which the server system is configured to tokenise user data for storage.

4. A system according to claim 1 or 2 in which the system is configured to encrypt user data for storage.

5. A system according to any preceding claim in which the system is configured to enable a user to link transactions to a loyalty card or reward scheme.

6. A system according to claim 5 configured to provide loyalty card or reward scheme data to a merchant terminal from the server system when a user makes a purchase, and to update loyalty/reward data at the merchant terminal.

7. A system according to claim 6 configured to provide loyalty/reward data to the server system and to enable access to said data from a respective user terminal.

8. A system according to claim 6 or 7 configured to provide cashback to a user bank account when loyalty/reward data exceeds a threshold.

9. A method for processing and storing transaction data for users comprising the steps of:
processing at a merchant terminal transaction payment information and storing transaction data;
generating purchase verification data for each transaction at a financial institution;
receiving at a server transaction data from merchant terminals and receiving corresponding purchase verification data from the financial institution;
matching said transaction data to said purchase verification data; and
sending transaction data which matches purchase verification to respective user terminals associated with said transaction data.

10. A method according to claim 9 in which the step of sending transaction data to user terminals takes place substantially in real time.

11. A method according to claim 9 or 10 including the step of tokenising user data for use in the method.

12. A method according to claim 9 or 10 including the step of encrypting user data for use in the method.

13. A method according to claims 9, 10, 11 or 12 including the step of linking transaction data to a loyalty card, reward scheme or advertising.

14. A method according to claim 13 including the step of providing loyalty and a reward scheme data to a merchant terminal from the server and updating loyalty/reward data at the merchant terminal when a user makes a purchase/

15. A method according to claim 13 including the step of providing the loyalty/reward data to the server and enabling said data to be access by a respective user terminal.
